**Europäisches Patentamt**

**European Patent Office**

**Office européen des brevets**

(19)

(11) **EP 1 370 038 A1**

(12) # DEMANDE DE BREVET EUROPEEN

(43) Date de publication:
**10.12.2003 Bulletin 2003/50**

(51) Int Cl.[7]: **H04L 27/00**

(21) Numéro de dépôt: **02291406.3**

(22) Date de dépôt: **06.06.2002**

| | |
|---|---|
| (84) Etats contractants désignés:<br>**AT BE CH CY DE DK ES FI FR GB GR IE IT LI LU MC NL PT SE TR**<br>Etats d'extension désignés:<br>**AL LT LV MK RO SI**<br><br>(71) Demandeur: **CSEM**<br>**Centre Suisse d'Electronique et de Microtechnique S.A. - Recherche et Développement**<br>**2007 Neuchâtel (CH)** | (72) Inventeur: **Gerrits, John**<br>**2016 Cortaillod (CH)**<br><br>(74) Mandataire: **Caron, Gérard et al**<br>**Cabinet JP Colas**<br>**37 avenue Franklin D. Roosevelt**<br>**75008 Paris (FR)** |

(54) **Procédé et générateur pour engendrer des signaux en ondelettes**

(57) Procédé pour engendrer un signal en ondelettes destiné à la transmission d'information sur une très large bande de fréquence (UWB), chaque ondelette présentant une approximation de la dérivée d'ordre N d'une gaussienne avec N= 1, 2, 3..., N, caractérisé en ce qu'il consiste:

- à engendrer une variable ($V_{in}$) dont la forme d'onde présente une succession de transitions linéaires entre deux niveaux ($niv_i$, $niv_s$);
- à convertir chaque transition de ladite forme d'onde ($V_{in}$) en établissant, de façon glissante dans le temps, une somme de N+2 termes consécutifs d'une série alternée de la forme:

$$G_N(x/k) = \sum_{j=1}^{N+2} a_j \tanh\left(x - b_j\right)$$

de manière à obtenir l'ondelette correspondant à la transition considérée et dont la forme correspond à ladite dérivée $G_N$, forme dans laquelle:

- N = ordre de la dérivée,
- j = indice de sommation,
- a = facteur de pondération à l'indice j,
- k = facteur d'échelle
- b = coefficient de décalage à l'indice j,
- x = la variable qui présente lesdites transitions, a, k et b étant déterminés de façon à optimiser ladite approximation.

FIG.: 3

EP 1 370 038 A1

**Description**

La présente invention est relative à un procédé et à un générateur pour engendrer un signal en ondelettes destiné à la transmission d'informations sur une très large bande de fréquence (UWB pour Ultra Wide Band), chaque ondelette présentant une approximation de la dérivée d'ordre N d'une gaussienne d'une grandeur électrique évoluant en fonction du temps, avec N= 1, 2, 3....N. L'invention concerne également un générateur pour la mise en oeuvre de ce procédé, ainsi qu'un émetteur et un récepteur comprenant un tel générateur.

On sait que dans la technique des communications radio dites "à impulsions", on peut utiliser, comme porteuse des données à transmettre, des impulsions de courte durée et à large bande de fréquences appelées aussi "ondelettes", celles-ci contenant l'information par exemple sous la forme d'une modulation des positions relatives des ondelettes dans le temps (modulation de type PPM). Ces ondelettes forment un signal radio étalé dans une très large bande de fréquences, cette bande pouvant avoir une largeur de 25% supérieure à la fréquence centrale du spectre des ondelettes. Pour fixer les idées, cette fréquence centrale peut être située dans une gamme allant de 1 à 5 GHz, par exemple.

On sait également que de tels signaux radio sont très peu sensibles aux perturbations et aux réflexions dues à des obstacles sur le trajet de transmission. Une application intéressante de cette technique pourrait être celle visant les communications dans des milieux où différentes liaisons de communication existent déjà sur différentes bandes de fréquence étroites dédiées et à forte densité de puissance. Les communications à très large bande ont alors l'avantage de pouvoir répartir, pour une liaison de communication donnée, une puissance émise sur une très large bande de fréquences rendant la liaison à la fois peu gênante vis-à-vis des autres liaisons de communication à bande étroite et peu sensible aux rayonnements parasites dues à ces dernières.

Il est également connu que pour être efficace, une liaison par radio à impulsions doit présenter des ondelettes dont la forme d'onde se rapproche aussi près que possible d'une dérivée d'une courbe gaussienne (voir article de Robert A. Scholtz et al. intitulé "Evaluation of the Propagation Characteristics of Ultra-Wideband Communication Channels" (Evaluation des caractéristiques de propagation de liaisons de communication à très large bande)), Antenna and Propagation Society International Symposium, 1998, IEEE, Vol 2, 1998, pp 626 à 630). Cet article traite uniquement des aspects théoriques de la propagation des ondelettes, mais en revanche ne propose pas d'implémentation pratique d'un circuit utilisable pour engendrer des signaux à ondelettes, en particulier dans l'application préférentielle énoncée ci-dessus.

Un autre domaine dans lequel on utilise des signaux impulsionnels à large bande de fréquences est celui des systèmes radar. Dans ce cas, les impulsions ont une très haute énergie et sont en général engendrées à l'aide de circuits comportant des diodes "step recovery" ou des diodes à claquage. Ces circuits ne permettent pas d'engendrer des ondelettes dont les paramètres temporels et la forme sont déterminables avec précision. De plus, ils nécessitent des tensions d'alimentation très élevées (voir l'ouvrage de James D. Taylor, Editor, "Ultra-Wideband Radar Technology" (Technologie radar à très large bande) New-York: CRC Press, 2000).

Or, des applications particulièrement prometteuses des signaux à ondelettes sont celles des appareils de communication portables destinés à assurer les communications entre personnes par exemple dans des bâtiments ou autres enceintes de volume relativement restreint. La structure de tels appareils portables est naturellement incompatible avec des sources d'alimentation à haute tension, car pour être portables, leur source d'énergie ne peut être constituée que par une pile de faible puissance et de faible coût.

L'invention a pour but de fournir un procédé et un générateur pour sa mise en oeuvre permettant d'engendrer un signal à ondelettes destiné à la transmission d'informations sur une très large bande de fréquence, qui soient utilisables avec une source d'énergie de très faible puissance et qui puissent être mis en oeuvre moyennant un circuit d'un encombrement tel que l'on peut l'incorporer dans un appareil de faible taille, notamment portable, consommant très peu d'énergie.

L'invention a donc tout d'abord pour objet un procédé présentant les caractéristiques définies dans la revendication 1.

Grâce à ces caractéristiques, les signaux en ondelettes peuvent être engendrées moyennant un circuit pouvant être intégré et consommant donc très peu d'énergie, tout en garantissant des caractéristiques bien définies de la forme et de l'espacement temporel des ondelettes.

L'invention a également pour objet un générateur d'ondelettes pour la mise en oeuvre de ce procédé, ce générateur présentant les caractéristiques définies dans la revendication 12.

L'invention a encore pour objet, en tant qu'application du procédé et du générateur selon l'invention, un émetteur et un récepteur communiquant entre eux par des signaux en ondelettes engendrés selon le procédé suivant l'invention, émetteur et récepteur tels que définis respectivement dans les revendications14 et 15.

Des développements avantageux des objets de l'invention sont définis dans les sous-revendications.

D'autres caractéristiques et avantages de la présente invention apparaîtront au cours de la description qui va suivre, donnée uniquement à titre d'exemple et faite en se référant aux dessins annexés sur lesquels:

la figure 1 représente plusieurs graphes montrant la courbe d'un signal gaussien et de ses dérivées d'ordre 1, 2 et 3;

les figures 2A et 2B représentent des graphes illustrant comment une ondelette peut être construite à partir de tronçons d'un signal en tangente hyperbolique pour approcher la forme d'une dérivée première respectivement seconde d'une courbe gaussienne;

la figure 3 est un schéma très simplifié d'un générateur d'un signal en ondelettes mettant en oeuvre le procédé de l'invention;

la figure 4 est un schéma explicatif illustrant la conversion, exécutée à l'aide d'une paire différentielle de composants semi-conducteurs, d'un signal formé d'une succession de transitions linéaires entre deux niveaux en un signal présentant la forme d'un tronçon de tangente hyperbolique;

la figure 5 est un schéma détaillé d'un générateur d'ondelettes selon l'invention, permettant d'engendrer des ondelettes présentant la forme approchée d'une dérivée seconde d'une gaussienne;

les figures 5A, 5B et 5C représentent respectivement le rapport $I_{out}/I_{ref}$ de certains courants circulant dans le circuit de la figure 5, la dérivé première et la dérivée seconde de ce rapport en fonction de l'évolution d'un flanc montant de la forme d'onde $V_{in}$ présentant la succession de transitions.

la figure 6 est un schéma symbolique d'un émetteur utilisant un générateur d'ondelettes suivant l'invention et destiné à assurer une émission de données numériques;

la figure 7 représente graphiquement un exemple de codage possible des données pouvant être émises par l'émetteur de la figure 6;

la figure 8 montre, pour ce qui concerne l'émetteur de la figure 6, comment l'antenne d'émission peut être connectée au générateur d'ondelettes suivant l'invention;

la figure 9 illustre graphiquement les formes d'ondes présentes dans l'émetteur de la figure 6, pour en expliquer le fonctionnement;

la figure 10 est un schéma symbolique d'un récepteur utilisant deux générateurs d'ondelettes selon l'invention et capable de recevoir et d'interpréter un signal en ondelettes émis par l'émetteur de la figure 6;

la figure 11 est un schéma illustrant comment chaque générateur d'ondelettes du récepteur de la figure 10 peut être connecté à un mélangeur du récepteur de la figure 10.

la figure 12 illustre graphiquement les formes d'ondes présentes dans le récepteur de la figure 10, pour en expliquer le fonctionnement; et

la figure 13 montre graphiquement comment on peut régler la densité spectrale de puissance des ondelettes engendrées par le procédé de l'invention.

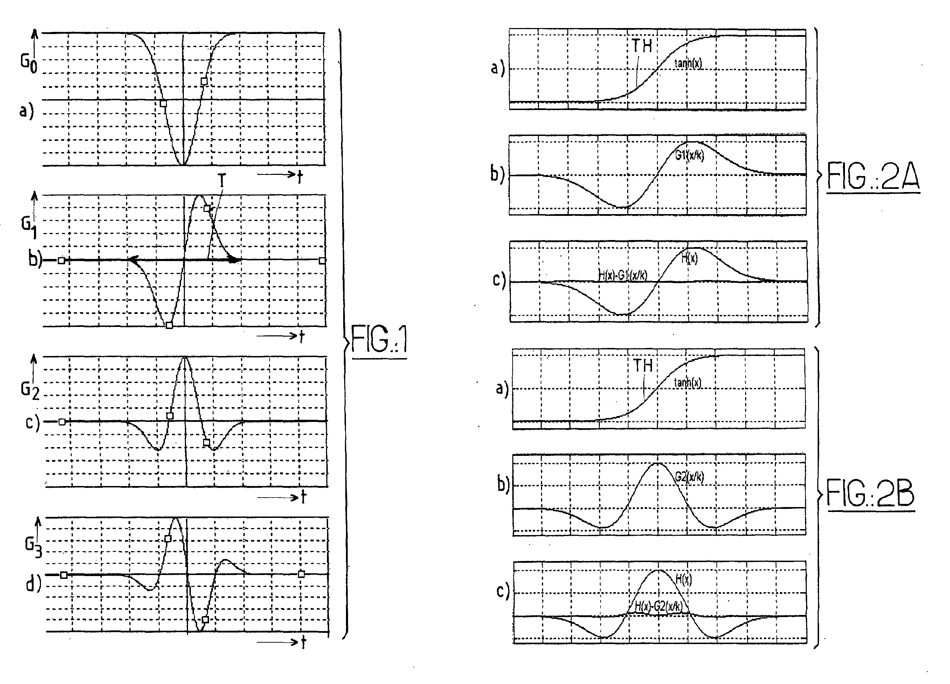

Les diagrammes d'onde a, b, c et d de la figure 1 représentent respectivement les dérivées d'ordre 0 à 3 ($G_0$ à $G_3$) d'une ondelette gaussienne formée par l'évolution d'une grandeur électrique en fonction du temps. Le procédé de l'invention permet d'engendrer les ondelettes ayant la forme des dérivées première, seconde, troisième etc. d'une telle gaussienne. Pour les applications envisagées (petits appareils d'émission/réception portables, par exemple), on peut noter que la durée T d'une ondelette formée par la dérivée première de la gaussienne peut être située entre 500 et 800 psec, par exemple. Par ailleurs, également pour fixer les idées, un signal en ondelettes utilisé pour la communication UWB, notamment dans l'application envisagée à titre d'exemple peut présenter un rapport cyclique de l'ordre de 0,001, par exemple.

L'invention est basée sur la constatation, illustrée sur les diagrammes a à c respectivement des figures 2A et 2B qu'une ondelette du type de la figure 1 peut être engendrée en "mettant bout-à-bout" des tronçons sélectionnés d'une fonction tangente hyperbolique TH (en a). La figure 2A illustre la formation de la dérivée première G1 et la figure 2B celle de la dérivée seconde G2. Ainsi, par exemple, celle-ci peut être approchée en composant une fonction H(x) (en c sur la figure 2B) de quatre tronçons de la fonction TH (en a sur la figure 2B), avec une approximation dont la précision est de l'ordre de 2 à 3%. Le diagramme c de la figure 2B illustre l'écart entre la courbe idéale et la courbe approchée au moyen de la fonction de différence DIFF qui est obtenue en faisant la soustraction H(x)-G2 des deux fonctions.

Selon l'invention, le concept qui vient d'être énoncé peut être formulé mathématiquement en formant la somme de N+2 termes consécutifs d'une série alternée de la façon suivante:

$$G_N(x/k) = \sum_{j=1}^{N+2} a_j \tanh\left(x - b_j\right) \qquad (1)$$

dans laquelle

- N = ordre de la dérivée,

- j = indice de sommation,
- a = facteur de pondération à l'indice j,
- k = facteur d'échelle
- b = coefficient de décalage à l'indice j,
- x = une variable présentant en fonction du temps une succession de transitions linéaires entre deux niveaux et a, k et b étant déterminés de façon à ce que l'approximation par rapport à la courbe

idéale de la dérivée de la gaussienne soit optimale.

Une modélisation de la formule mathématique ci-dessus fait apparaître que la meilleure approximation peut être obtenue si on choisit les valeurs suivantes pour les paramètres a, b et k en ne considérant ici que les dérivées première et seconde G1 et G2:

TABLEAU

|  |  $j \Rightarrow$ | 1 | 2 | 3 | 4 |
|---|---|---|---|---|---|
| G1 | a | - 0,5 | +1 | -0,5 | _ |
|  | b | -2 | 0 | 2 | _ |
|  | k | 4,25 | _ | _ | _ |
| G2 | a | -0,5 | 1 | -1 | 0,5 |
|  | b | -2 | -1 | 1 | 2 |
|  | k | 3,85 | _ | _ | _ |

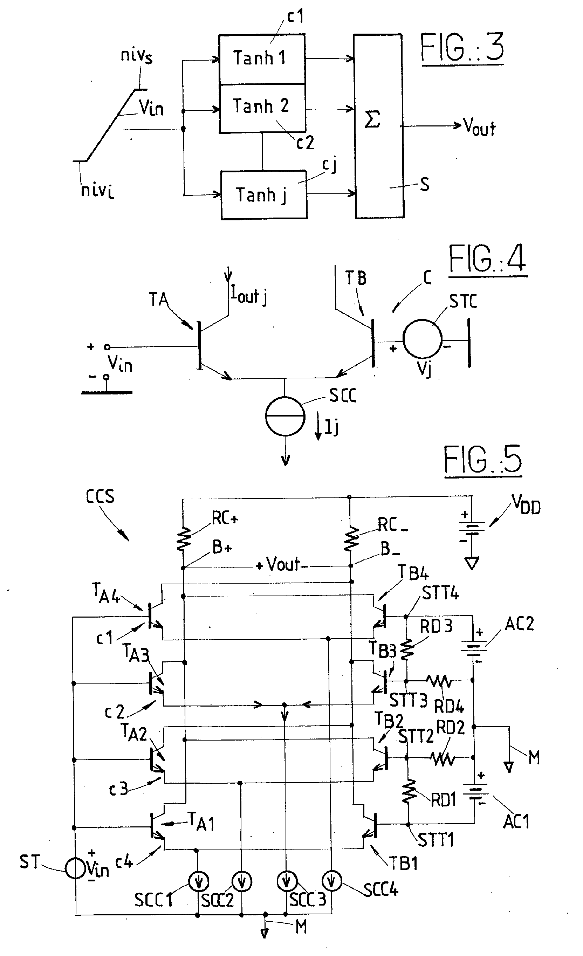

On a représenté sur la figure 3 un schéma de principe d'un circuit électronique capable de mettre en oeuvre la relation mathématique définie ci-dessus. Ce circuit comprend un nombre j de convertisseurs c1, c2.....cj auxquels est appliquée en parallèle une forme d'onde, ici de tension, $V_{in}$ qui évolue comme la variable x. Il s'agit d'une tension dont la valeur varie périodiquement d'un niveau inférieur $niv_i$ à un niveau supérieur $niv_s$ et inversement. Chaque convertisseur c1, c2.....cj convertit, de façon glissante dans le temps, cette forme d'onde en une portion de fonction tangente hyperbolique en appliquant de façon appropriée les données du tableau ci-dessus. Les résultats des conversions effectuées par les convertisseurs c1, c2... cj sont appliqués à un sommateur S qui délivre une forme d'onde, ici de tension, $V_{out}$ représentant le signal en ondelettes que l'on cherche à obtenir.

Selon une caractéristique importante de l'invention qui est illustrée sur la figure 4, chaque convertisseur, référencé ici par c, comprend une paire de transistors TA, TB connectés en un montage différentiel. Dans l'exemple, ces transistors sont de type bipolaire, mais on peut également utiliser une paire différentielle de transistors de type MOS que l'on polarisera alors de façon qu'ils travaillent dans le régime à faible inversion.

Dans le cas d'une paire différentielle de transistors bipolaires tels que TA et TB, on applique la tension $V_{in}$ (voir figures 3 et 4) à la base de l'un des transistors, en l'occurrence le transistor TA tandis que l'on connecte la base de l'autre transistor, TB, à une source de tension constante STC de valeur $V_j$ dépendant du terme de la somme que doit délivrer la paire de transistors considérée, c'est à dire de la valeur de l'indice j. Les émetteurs des transistors TA et TB sont connectés en commun à une source de courant constant SCC délivrant un courant $I_j$.

Pour ce montage, on peut exprimer le courant prélevé sur le collecteur du transistor TA par l'équation suivante:

$$I_{outj} = I_j \tanh \frac{V_{in} - V_j}{2V_T} \qquad (2)$$

dans laquelle $V_T$ est la tension thermique du transistor, bien connue des spécialistes, $I_{j}$ est égal à $a_j I_{ref}$, avec $V_T = \frac{kT}{q}$ ce qui dans le cas des transistors bipolaires vaut 26 mV à température ambiante.

L'expression (2) peut alors s'écrire:

$$I_{outj} = I_j \tanh\left( \frac{V_{in}}{2V_T} - \frac{V_j}{2V_T} \right) \qquad (3)$$

Ainsi, si on utilise N+2 paires différentielles de transistors TA et TB, on obtient, en sommant les courants délivrés par les paires:

$$I_{out} = \sum_{j=1}^{N+2} I_j \tanh\left(\frac{V_{in}}{2V_T} - \frac{V_j}{2V_T}\right) \qquad (4)$$

En confrontant cette expression (4) à l'expression (1) ci-dessus, on voit que:

- le facteur de pondération aj correspond au facteur $I_j$

- le facteur coefficient de décalage bj correspond au terme $\frac{V_j}{2V_T}$

- le facteur d'échelle k correspond au terme $\frac{2}{2V_T}$

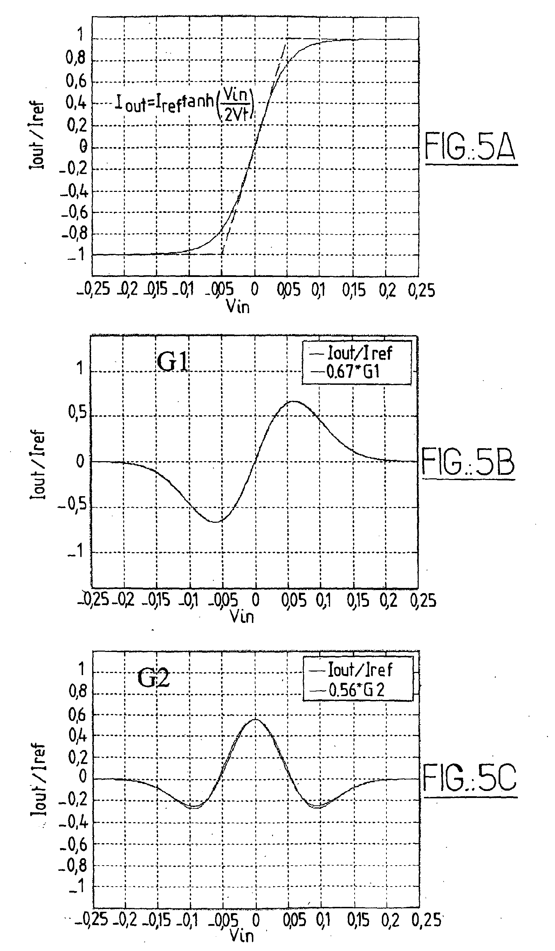

La figure 5 représente le schéma d'une implémentation pratique possible d'un circuit de conversion et de sommation CSS pouvant être utilisé pour le cas d'un générateur produisant la dérivée seconde $G_2$ d'une gaussienne $G_0$ (voir la figure 1).

Dans ce circuit de conversion et de sommation CCS, on retrouve N+2 convertisseurs c1, c2, c3 et c4 (N=2), formés chacun d'une paire de transistors TA1, TB1 à TA4, TB4, respectivement connectés comme les transistors de la figure 4.

Les bases des transistors TA1 à TA4 sont connectées en commun à une source de tension ST délivrant la tension $V_{in}$ (figure 3). Les émetteurs de chaque paire différentielle de transistors TA1, TB1 à TA4, TB4 sont connectés respectivement en commun à des sources de courant constant SCC1 à SCC4 destinés à délivrer un courant constant affecté du facteur de pondération a dont la valeur à l'indice j est celle du tableau ci-dessus. Ainsi, dans le cas représenté, les sources de courant constant SCC1 à SCC4 peuvent délivrer respectivement un courant de 500 μA (soit $0,5I_{ref}$), 1 mA (ou $I_{ref}$, 1 mA et 500 μA. Les bornes des sources de courant SCC1 à SCC4 opposées à celles qui sont reliées aux émetteurs des transistors, sont connectées à la masse M.

Dans le cas de la figure 5, le signal en ondelettes apparaît sous la forme d'une tension $V_{out}$ entre des noeuds de sortie B+ et B- qui sont respectivement reliés d'une part aux collecteurs respectifs des paires de transistors TA1, TB1 à TA4, TB4 et d'autre part à des résistances de collecteur respectives RC+ et RC- reliées par ailleurs en commun à une source de tension $V_{DD}$.

Pour ce qui est du signe du facteur de pondération a, on en tient compte dans le circuit CCS en connectant les collecteurs des transistors de chaque paire soit directement à la sortie (facteur a affecté d'un signe négatif), soit par l'intermédiaire d'une connexion croisée (facteur a affecté d'un signe positif). Ainsi, on remarquera que les collecteurs des transistors TA1 et TB1 sont reliés directement, respectivement aux noeuds B+ et B-. En revanche, les transistors TA2 et TB2 sont reliés respectivement aux bornes B- et B+ etc.

Les bases des transistors TB1 à TB4 sont respectivement reliées à des sources de tension STT1 à STT4 dont les valeurs de tension représentent la tension thermique des transistors affectée du facteur de pondération b à l'indice j correspondant du tableau ci-dessus. Les valeurs des tensions sont obtenues par l'intermédiaire de deux alimentations continues AC1 et AC2 délivrant leur tension, soit directement à une base des transistors (c'est le cas des transistors TB1 et TB4), soit par l'intermédiaire d'un diviseur de tension formé respectivement des résistances de division RD1 à RD4, le signe du facteur de pondération b étant obtenu par une connexion adéquate des polarités des deux alimentations AC1 et AC2. La tension thermique des transistors étant d'environ 26 mV, ces alimentations délivrent une tension d'environ -100mV et +100mV aux bases des transistors respectifs TB1 et TB4 et des tensions de la moitié de cette valeur aux bases des transistors respectifs TB2 et TB3, conformément aux valeurs du coefficient b données dans le tableau ci-dessus.

Dans le cas de la figure 5, il est souhaitable que la tension de la source ST évolue entre -200 mV et + 200 mV, ces valeurs correspondant donc respectivement aux niveaux $niv_i$ et $niv_s$ déjà mentionnés à propos de la figure 3.

A l'aide du tableau ci-dessus, l'homme de métier saura réaliser sans difficulté un générateur capable de délivrer un signal en ondelettes correspondant à la dérivée première de la gaussienne. Il pourra également déterminer les facteurs de pondération a et b au cas où il souhaiterait engendrer un signal en ondelettes formée de dérivées d'ordres supérieurs et à partir de là composer un circuit comprenant le nombre de paires de transistors nécessaires. Ces cas ne sont donc pas repris en détail ici.

Les figures 5A, 5B et 5C montrent pour ce qui concerne le montage de la figure 5, en fonction de l'évolution de la tension Vin, respectivement celle du rapport $I_{out}/I_{ref}$ des courants correspondants circulant dans ce montage, de la dérivée première et de la dérivée seconde de ce rapport, les échelles des graphes résultant d'un exemple pratique mis en oeuvre.

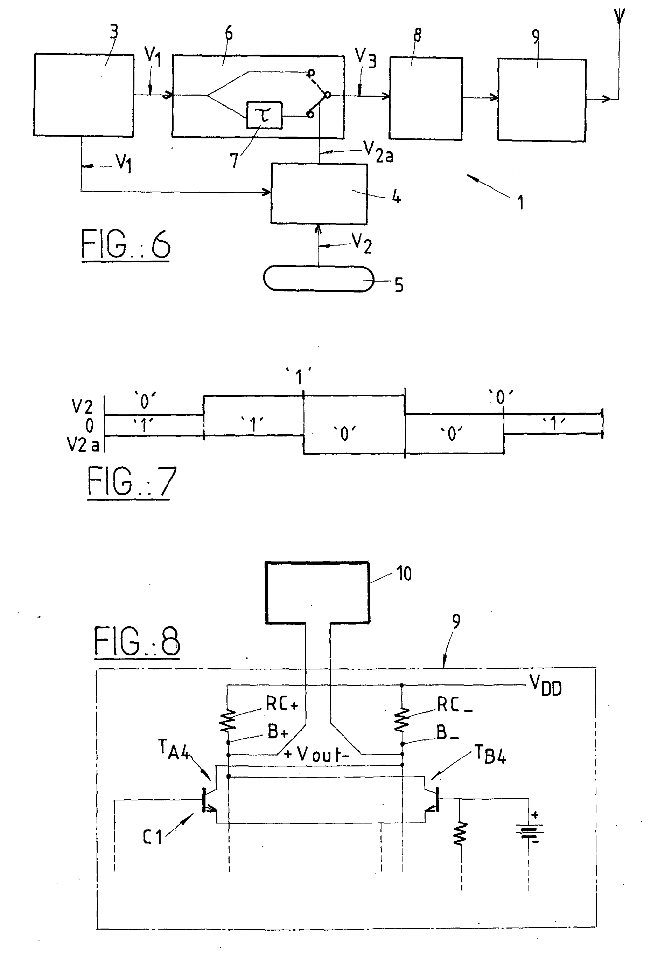

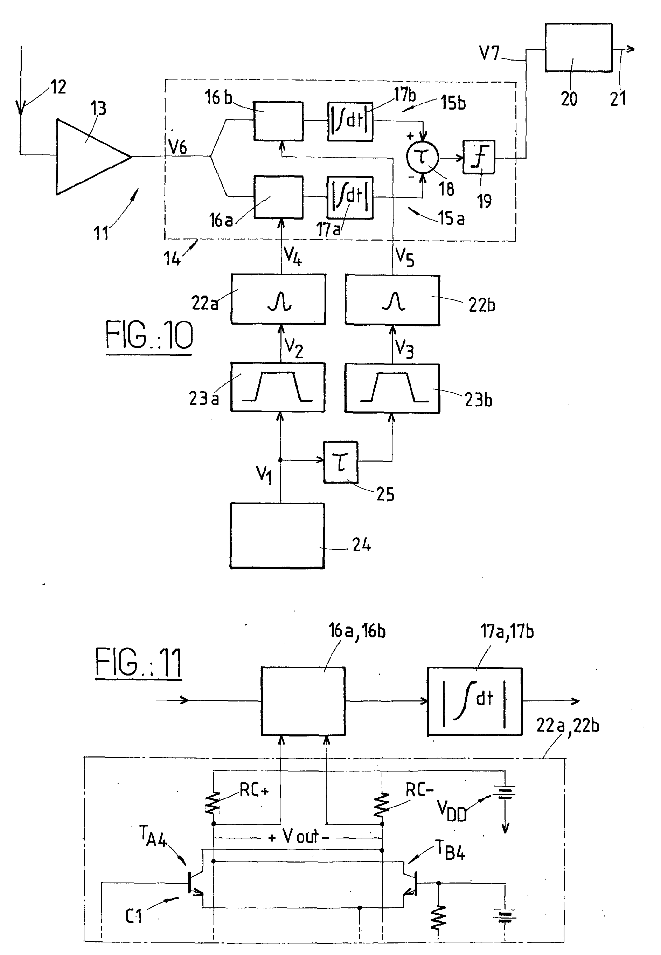

On va maintenant décrire, à titre d'exemple uniquement, une application du procédé et du générateur qui viennent d'être décrits. Elle est constituée par une liaison de communication d'information numérisée entre un émetteur 1 (figure 6) et un récepteur 2 (figure 10), communiquant entre eux au moyen d'un train d'ondelettes.

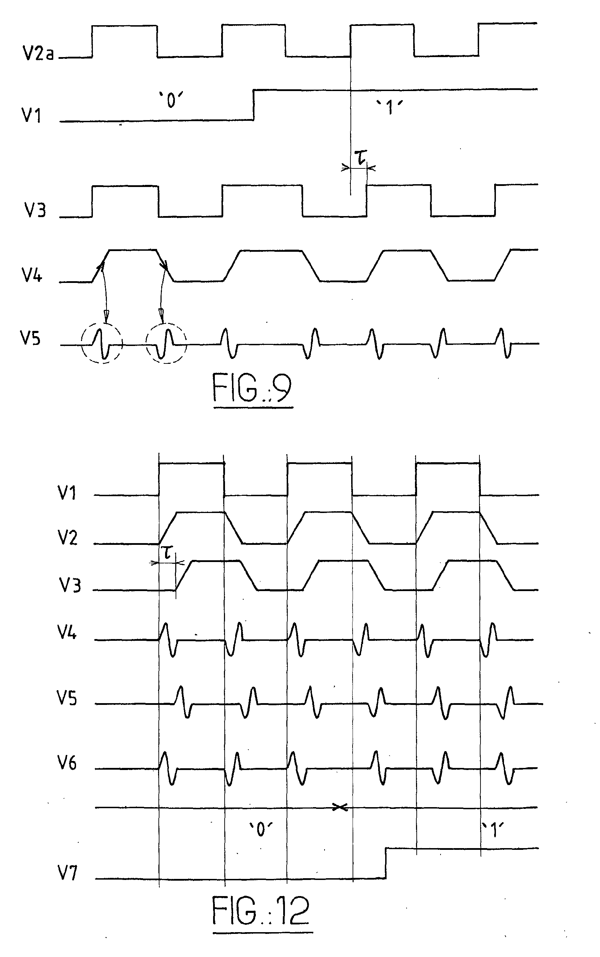

L'émetteur 1 comprend un générateur d'impulsions 3 dont la sortie V1 (figure 9) est appliquée à un circuit de codage 4. Ce dernier est commandé par une source 5 de données à transmettre, représentée par exemple par la forme d'onde V2. Le générateur d'impulsions 3 est également relié à un modulateur d'impulsions 6 qui permet essentiellement de transmettre à sa sortie les impulsions produites par le générateur 3, soit directement sans décalage temporel, soit indirectement grâce à une fonction à retard 7 avec un décalage temporel $\tau$ (forme d'onde V3 de la figure 9) selon que l'information à transmettre représente un "1" ou un "0". La sortie V3 du modulateur 6 commande un générateur de fonction 8 destiné à engendrer une forme d'onde V4 dont les impulsions ont une forme trapézoïdale. La sortie de ce générateur de fonction 8 est connectée à un générateur d'ondelettes 9 dont le schéma peut être quasiment celui représenté sur la figure 5. Le générateur de fonction 8 constitue ainsi la source de tension ST que l'on trouve dans ce schéma.

La figure 8 illustre comment le générateur d'ondelettes CCS de la figure 5 peut être modifié pour former le générateur 9 et permettre ainsi une émission des ondelettes produites. A cet effet, les collecteurs des transistors TA4 et TB4 sont respectivement connectés aux extrémités d'une antenne en boucle 10, et les résistances RC+ et RC- sont connectées à une tension d'alimentation $V_{DD}$. En variante, on peut également omettre les résistances et connecter le milieu de l'antenne 10 à une tension d'alimentation $V_{DD}$.

La figure 7 montre un exemple de codage d'information pouvant être utilisé pour coder les données V2. Il s'agit ici d'un codage de type Manchester bien connu des spécialistes. Le code Manchester n'est donné qu'à titre d'exemple ; il comporte certains avantages mais n'est pas obligatoire.

La figure 9 montre comment la modulation PPM module le train d'ondelettes par un décalage temporel selon que l'information est constituée par un "1" ou un "0".

Il est à noter que dans le présent exemple seuls les flancs montants du signal V4 sont utilisés, ces flancs montants donnant naissance à des ondelettes dont chaque fois le début est croissant. Bien entendu, il est également envisageable de coder l'information avec les deux types d'ondelettes en exploitant les flancs aussi bien montants que descendants de la forme d'onde V4.

La figure 10 représente un exemple de réalisation d'un récepteur 11 conçu pour recevoir le train d'ondelettes codé émis par un émetteur tel que celui représenté à la figure 6 et d'en décoder l'information. Ce récepteur 11 comprend une antenne 12 qui est reliée à l'entrée d'un amplificateur à large bande 13. Le signal de sortie de cet amplificateur 13 est appliqué à un démodulateur désigné globalement par la référence 14.

Le démodulateur 14 comprend deux voies d'analyse 15a et 15b composées chacune d'un mélangeur 16a, 16b et d'un intégrateur 17a, 17b raccordés l'un à la suite de l'autre. Les sorties des deux intégrateurs sont appliquées à un sommateur 18 connecté à son tour à un détecteur de seuil 19.

La sortie de ce dernier est appliquée à un décodeur 20 délivrant sur une borne 21 un signal binaire correspondant au contenu d'information du signal en ondelettes reçu par l'antenne 12.

Chacun des mélangeurs 16a et 16b est raccordé également à un générateur d'ondelettes 22a, respectivement 22b. Ces générateurs sont conçus conformément au schéma de la figure 5. Chacun d'eux est raccordé à un générateur de fonction respectif 23a, 23b qui sont commandés par un générateur d'impulsions 24, l'un 23a directement et l'autre (23b) par l'intermédiaire d'un circuit à retard 25. De ce fait, les générateurs d'ondelettes 22a et 22b délivrent des trains d'ondelettes déphasés du délai $\tau$ introduit par le circuit à retard 25 et égal à celui introduit par le circuit à retard 7 de la figure 6. Ainsi, la voie 15a peut démoduler du signal haute fréquence de l'antenne 12, les ondelettes affectées à l'un des niveaux binaires, tandis que la voie 15b démodule les ondelettes appartenant au niveau binaire opposé. Les intégrateurs 17a et 17b élaborent la valeur absolue de l'intégrale par rapport au temps de la forme d'onde appliquée à leur entrée par les mélangeurs respectifs 16a et 16b.

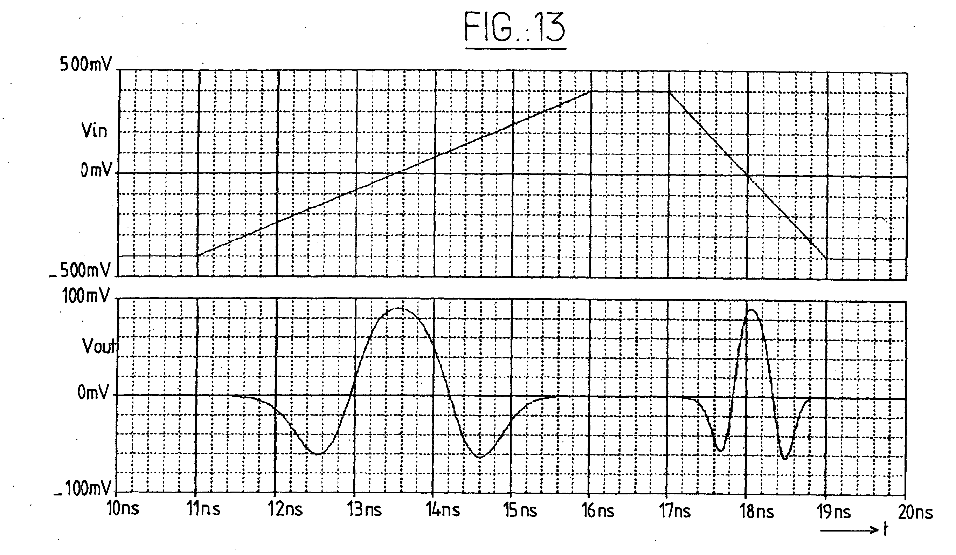

La figure 12 représente les formes des signaux présents sur différentes sorties des composants représentés sur la figure 10, au cours d'une transition du niveau binaire "0" au niveau binaire "1" dans le signal haute fréquence reçue. Il est à noter que dans la présente description, ni l'aspect de la synchronisation, ni les détails du récepteur 11 ne sont abordés, étant entendu que les principes de fonctionnement d'un récepteur de signaux en ondelettes sont connus en soi. A titre d'exemple uniquement, les composants suivants pourront être utilisés:

pour ce qui concerne les composants 4 à 7 de la figure 6:

- la boucle à verrouillage de phase fabriquée par la Société "'National Semiconductor" sous le numéro CD406BM/CD4046BC;

pour ce qui concerne l'oscillateur 3 de la figure 6:

- le composant fabriqué sous la dénomination POS par la Société Minicircuits New-York;

pour ce qui concerne le préamplificateur de la figure 10:

- le composant fabriqué sous la dénomination ERA ou ERA-SM par la Société Minicircuits, New-York;

et pour ce qui concerne le démodulateur 14 de la figure 10:

- le composant fabriqué par la Société National Semiconductor sous la référence LM1596/LM1496; à cet égard l'homme de métier pourra également se référer à une thèse, pages 79, 80, 81, présentée par M.H.L Kouwenhoven le 23 mars 1998 à l'Université de Delft, Pays-Bas.

Par ailleurs, on peut trouver une description du décodage du code Manchester dans l'ouvrage de Linsey et Simon intitulé Télécommunication Systems Engeneering, édité par Dover Publications, Inc, New-York.

La figure 11 représente comment les générateurs d'ondelettes 22a et 22b peuvent être connectés à leurs modulateurs respectifs 16a et 16b. Les noeuds entre les résistances RC+ et RC- et les collecteurs des transistors respectifs TB4 et TA4 sont ici reliés au mélangeur correspondant 16a ou 16b.

La figure 13 montre que, selon une caractéristique intéressante de l'invention, il est possible de régler facilement l'étalement dans le temps des ondelettes engendrées par le générateur d'ondelettes proposé afin de déterminer la fréquence centrale des ondelettes. Il suffit à cet effet de régler la pente de la fonction de commande $V_{in,}$ comme illustré sur la figure en question. Dans le cas présent, ceci est réalisé sur les fronts montant et descendant d'une même impulsion du signal de commande. Il est clair que la variation de la pente peut également être appliquée sur un même flanc, montant ou descendant, des impulsions successives, moyennant quoi, on peut disposer d'un autre moyen de codage des ondelettes.

D'après la description qui précède, on constate que l'invention conduit à la possibilité de réalisation d'émetteurs et de récepteurs qui peuvent communiquer entre eux par des signaux en ondelettes et qui comprennent des circuits facilement intégrables et ne consomment donc que très peu d'énergie. On peut donc les réunir dans des appareils portables pour assurer la communication sur de faibles distances, par exemple dans des environnements à forte densité de rayonnement électromagnétique comme les bâtiments et analogues.

## Revendications

1. Procédé pour engendrer un signal en ondelettes destiné à la transmission d'information sur une très large bande de fréquence (UWB), chaque ondelette présentant une approximation de la dérivée d'ordre N d'une gaussienne avec N= 1, 2, 3....N, **caractérisé en ce qu'**il consiste:

    - à engendrer une variable ($V_{in}$) dont la forme d'onde présente une succession de transitions linéaires entre deux niveaux ($niv_i$, $niv_s$);
    - à convertir chaque transition de ladite forme d'onde ($V_{in}$) en établissant, de façon glissante dans le temps, une somme de N+2 termes consécutifs d'une série alternée de la forme:

$$G_N(x/k) = \sum_{j=1}^{N+2} a_j \tanh(x - b_j)$$

de manière à obtenir l'ondelette correspondant à la transition considérée et dont la forme correspond à ladite dérivée $G_N$, forme dans laquelle:

    - N = ordre de la dérivée,
    - j = indice de sommation,
    - a = facteur de pondération à l'indice j,
    - k = facteur d'échelle
    - b = coefficient de décalage à l'indice j,
    - x = la variable qui présente lesdites transitions, a, k et b étant déterminés de façon à optimiser ladite approximation.

**2.** Procédé selon la revendication 1, **caractérisé en ce que** l'opération d'optimisation de l'approximation est faite expérimentalement par réduction à un minimum de la différence entre les ondelettes obtenues et la dérivée de la gaussienne que l'on veut obtenir.

**3.** Procédé selon l'une quelconque des revendications 1 et 2, **caractérisé en ce que** dans le cas de la production de la dérivé d'ordre 1, les valeurs de a, k et b sont choisies selon le tableau suivant:

|  | j $\Rightarrow$ | 1 | 2 | 3 | 4 |
|---|---|---|---|---|---|
| G1 | a | - 0,5 | +1 | -0,5 | - |
|  | b | -2 | 0 | 2 | - |
|  | k | 4,25 | _ | _ | _ |

**4.** Procédé selon l'une quelconque des revendications 1 et 2, **caractérisé en ce que** dans le cas de la production de la dérivé d'ordre 1, les valeurs de a, k et b sont choisies selon le tableau suivant:

|  | j $\Rightarrow$ | 1 | 2 | 3 | 4 |
|---|---|---|---|---|---|
| G2 | a | -0,5 | 1 | -1 | 0,5 |
|  | b | -2 | -1 | 1 | 2 |
|  | k | 3,85 | _ | _ | _ |

**5.** Procédé selon l'une quelconque des revendications 3 et 4, **caractérisé en ce qu'**on engendre chaque terme consécutif de ladite série alterné par l'intermédiaire d'une paire différentielle de transistors (TA, TB), en appliquant à la base de l'un (TA) des transistors ladite forme d'onde ($V_{in}$), et **en ce que** l'on fait fonctionner lesdits transistors par des grandeurs électriques dimensionnées en fonction desdits coefficients de pondération et de décalage (a, b).

**6.** Procédé selon la revendication 5, **caractérisé en ce que** les transistors (TA, TB) de chacune desdites paires différentielles sont de type bipolaire.

**7.** Procédé selon la revendication 5, **caractérisé en ce que** les transistors de chacune desdites paires différentielles sont de type MOS que l'on fait fonctionner dans le régime à faible inversion.

**8.** Procédé suivant l'une quelconque des revendications 5 à 7, **caractérisé en ce que** ledit coefficient de pondération (a) est pris en compte par dimensionnement du courant commun d'émetteur ($I_j$) des transistors de chacune desdits paires différentielles de transistors (TA, TB).

**9.** Procédé suivant l'une quelconque des revendications 5 à 8, **caractérisé en ce que** ledit coefficient de décalage est pris en compte par dimensionnement d'une tension de polarisation appliquée à la base de l'autre transistor de chacune desdits paires différentielles de transistors.

**10.** Procédé suivant la revendication 9, **caractérisé en ce que** ladite tension de polarisation est un multiple de la tension thermique desdits transistors.

**11.** Générateur d'ondelettes pour la mise en oeuvre du procédé défini dans l'une quelconque des revendications 1 à 10, **caractérisé en ce qu'**il comprend:

- un nombre N+2 de convertisseurs (c1 à cj) ayant chacun une entrée à laquelle est destinée à être connectée une première source de tension (ST) fournissant ladite forme d'onde ($V_{IN}$) présentant une succession de transitions linéaires entre deux niveaux ($niv_{inf}$, $niv_{sup}$), chaque convertisseur étant agencé pour convertir ladite première forme d'onde en un tronçon de courbe en tangente hyperbolique pour délivrer sur sa sortie un signal représentant ledit tronçon de courbe et
- des moyens de sommation (S) agencés pour additionner lesdits tronçons de courbe et délivrer un signal en ondelettes ($V_{OUT}$) représentatif de la dérivée recherchée de la gaussienne.

**12.** Générateur suivant la revendication 11, **caractérisé en ce que** chacun desdits convertisseurs (c1 à c4) comprend une paire différentielle de transistors (TA1 à TA4, TB1 à TB4), à la base de l'un desquels est connectée ladite première source de tension (ST), à la base de l'autre desquelles est connectée une seconde source de tension (STT1 à STT4) dont la valeur est représentatif du coefficient de décalage (b) correspondant au tronçon de courbe devant être engendré par ce convertisseur et dont les émetteurs, raccordés en commun sont reliés à une source de courant (SCC1 à SCC4) fournissant un courant dont la valeur est représentative du facteur de pondération (a) correspondant au tronçon de courbe devant être engendré par ce convertisseur, et **en ce que** lesdits moyens de sommation sont formés par deux noeuds de connexion (+B, -B) auxquels sont raccordés les collecteurs des transistors des paires différentielles des convertisseurs, sélectivement en fonction du signe dudit coefficient de pondération (a) utilisé par le convertisseur considéré.

**13.** Emetteur de trains d'ondelettes codés par de l'information numérique par modulation de la position des ondelettes dans le temps, comprenant un générateur d'impulsions (3), un modulateur d'impulsions (6) raccordé à ce générateur d'impulsions, un circuit de codage (4), connecté également à ce générateur d'impulsions et dont le signal de sortie module la position dans le temps des impulsions fournies par ledit modulateur d'impulsions, et une antenne (10) pour rayonner lesdites ondelettes, cet émetteur étant **caractérisé en ce qu'**il comprend un générateur d'ondelettes (9) suivant l'une quelconque des revendications 11 et 12 raccordé à ladite source de tension, ladite antenne (10) étant raccordée à la sortie dudit générateur d'ondelettes (9).

**14.** Emetteur suivant la revendication 13, **caractérisé en ce que** ladite antenne est une antenne en boucle (10) dont les extrémités sont respectivement connectées aux deux noeuds de connexion (+B, -B) dudit générateur (9).

**15.** Récepteur de trains d'ondelettes codés par de l'information numérique par modulation de la position des ondelettes dans le temps, comprenant un amplificateur haute fréquence (13) pour amplifier un train d'ondelettes reçu par une antenne (12), un démodulateur (14) comprenant deux voies d'analyse (15a, 15b) affectées respectivement aux deux niveaux de l'information codant ledit train d'ondelettes reçu, chacune desdites voies comprenant un mélangeur (16a, 16b) dont la sortie est appliquée à des intégrateurs (17a, 17b) et ensuite à l'une des entrées d'un sommateur (18) restituant ladite information sous forme d'une suite d'impulsions codées, ce récepteur étant **caractérisé en ce qu'**il comprend pour chacune desdites voies d'analyse (15a, 15b) un générateur d'ondelettes (22a, 22b) suivant l'une quelconque des revendications 11 et 12 et une source de tension (ST) fournissant ladite forme d'onde présentant une succession de transitions linéaires entre deux niveaux , et **en ce qu'**il est prévu des moyens (25) pour déphaser lesdites formes d'ondes d'un délai temporel ($\tau$) correspondant au décalage temporel par lequel diffèrent les positions des ondelettes dans ledit train d'ondelettes reçu.

FIG.1

FIG.2A

FIG.2B

EP 1 370 038 A1

FIG.:3

FIG.:4

FIG.:5

$$I_{out}=I_{ref}tanh\left(\frac{Vin}{2Vt}\right)$$

FIG.5A

FIG.:5B

FIG.:5C

FIG.:6

FIG.:7

FIG.:8

FIG.:9

FIG.:12

FIG.:10

FIG.:11

FIG.13

Office européen
des brevets

**RAPPORT DE RECHERCHE EUROPEENNE**

Numéro de la demande

EP 02 29 1406

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 01 22672 A (SMITH STEPHEN F ;UT BATTELLE LLC (US); DRESS WILLIAM B JR (US)) 29 mars 2001 (2001-03-29)<br>* page 6, ligne 11 - ligne 19 *<br>* page 9, ligne 6 - ligne 9 *<br>* page 11, ligne 24 - ligne 28 *<br>* page 18, ligne 8 - ligne 9 *<br>* page 19, ligne 23 - ligne 25 *<br>* figure 10 *<br>--- | 1,3,4, 11,13,15 | H04L27/00 |
| A | US 6 181 754 B1 (CHEN JESSE E) 30 janvier 2001 (2001-01-30)<br>* colonne 6, ligne 10 - ligne 17 *<br>* figure 4C *<br>----- | 1 | |

| DOMAINES TECHNIQUES RECHERCHES (Int.Cl.7) |
|---|
| H04L<br>H04B |

Le présent rapport a été établi pour toutes les revendications

| Lieu de la recherche | Date d'achèvement de la recherche | Examinateur |
|---|---|---|
| LA HAYE | 15 novembre 2002 | Moreno, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 02 29 1406

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-11-2002

| Document brevet cité au rapport de recherche | | Date de publication | Membre(s) de la famille de brevet(s) | | Date de publication |
|---|---|---|---|---|---|
| WO 0122672 | A | 29-03-2001 | AU | 7127700 A | 24-04-2001 |
| | | | EP | 1228613 A1 | 07-08-2002 |
| | | | WO | 0122672 A1 | 29-03-2001 |
| | | | US | 2002097790 A1 | 25-07-2002 |
| | | | US | 2002146080 A1 | 10-10-2002 |
| | | | US | 2002080889 A1 | 27-06-2002 |
| US 6181754 | B1 | 30-01-2001 | AUCUN | | |

EPO FORM P0460

Pour tout renseignement concernant cette annexe : voir Journal Officiel de l'Office européen des brevets, No.12/82